# EUROPEAN PATENT SPECIFICATION

(11) **EP 1 881 231 B1**
(45) Date of publication and mention of the grant of the patent: **26.09.2012**
(21) Application number: 07011685.0
(22) Date of filing: 14.06.2007
(51) Int. Cl.: F16G 13/04, C23C 8/22, C22C 38/22

(54) **Chain for use in automobile engine**
Kette zur Verwendung in Kraftfahrzeugmotoren
Chaîne à utiliser dans un moteur de véhicule automobile

(30) Priority: 18.07.2006 JP 2006195679
(43) Date of publication of application: 23.01.2008
(73) Proprietor: Tsubakimoto Chain Co., Kita-ku Osaka 530-0005 (JP)
(72) Inventor: Nagao, Kenich, Osaka 530-0005 (JP)
(74) Representative: Ullrich & Naumann

(56) References cited:
- EP-A1- 0 982 515
- EP-A1- 1 635 087
- JP-A- 2005 290 435
- US-A1- 2006 094 551

## Description

### FIELD OF THE INVENTION

This invention relates to power transmitting chains for use in automobile engines, and to improvements particularly useful in timing chains, that is, chains used to deliver rotating power from an engine crankshaft to one or more valve-operating camshafts.

### BACKGROUND OF THE INVENTION

Metal roller chains, and rollerless chains known as bushing chains, have come into increasing use as power transmitting media for automobile engines, and have displaced toothed belts and V-belts because of the demand for reliable high speed operation, greater endurance, and increased capacity to withstand mechanical loads, and also because roller chains and bushing chains require less maintenance, and afford greater freedom in the design of the engine layout.

Silent chains have also come into increasing use as timing chains in automobile engines because of their quieter operation in addition to their high load capability and their capacity for high speed operation under severe conditions. A silent chain comprises interleaved rows of link plates interconnected by connecting pins, the pins and rows extending in the direction of the width of the chain. In a typical silent chain, the connecting pins are press-fit into guide link plates disposed along both sides of the chain, and extend through holes in inner link plates. Each inner link plates has a pair of teeth for engagement with sprocket teeth.

When the teeth of the inner link plates first come into contact with the sprocket teeth, they slide on the sprocket teeth as they approach a seated condition on the sprocket, and again slide on the sprocket teeth as they separate from the sprocket. This action of the silent chain reduces shock due to the collision between the chain and the sprocket and results in a low noise level.

The useful life of a timing chain can be seriously shortened due to oxidation and corrosion from exposure to deteriorated lubricating oil having a high degree of oxidation. To address this problem, we developed a roller chain in which the bushings were subjected to carburizing treatment, and a vanadium carbide (VC) layer was formed on the surfaces of the connecting pins. This development is described in US patent application publication 2005/0090348, dated April 28, 2005. The patent application publication is directed to roller chains and bushing chains. Adaption of the same technology to silent chains has not been effective to extend their service life when exposed to highly deteriorated lubricating oil having high degree of oxidation.

It has also been proposed, in Japanese Laid-Open Patent Publication No. 2005-290435, to improve the wear resistance of a silent chain by subjecting the outermost surface layer of the connecting pins of the chain to barrel polishing treatment following vanadium carbide treatment. Barrel polishing fully removes the outermost surface layer, which contains impurities, leaving a vanadium carbide surface layer in which substantially all of the vanadium carbide is in the form of V₈C₇. The outermost surface layer formed on the V₈C₇ layer containing contains large amounts of vanadium carbide in the form of V₂C. When the outermost layer is fully removed, excellent wear resistance is exhibited. However the pin does not conform well to the link plates, and the chain does not exhibit good shock resistance.

We made a detailed study of the cross-sections of vanadium carbide-treated pins by means of an electronic microscope. As a result of this study, and through repeated trial and error, we determined that, by reducing the surface roughness of the vanadium carbide layer on the pin, but without complete removal of the outermost, V₂C -containing, layer, the wear resistance and shock resistance of the pin could both be improved, so that, even when a silent chain incorporating the pins is used in highly deteriorated lubricating oil having a high degree of oxidation, abnormal wear elongation does not occur.

Accordingly, an object of the invention is to provide a chain for use in an automobile engine in which, even if the chain is used with a deteriorated lubricating oil having a high degree of oxidation, abnormal wear elongation is avoided, and the chain is capable of smooth flexing and sliding over a long period of time.

A further object of the invention is to provide a chain for use in an automobile engine which can maintain superior lubricity over a long period of time.

Still another object of the invention is to provide a chain, for use in an automobile engine, in which the connecting pins have a reduced tendency to attack the pin holes in the inner link plates, and in which the shock resistance of the chain is improved.

### SUMMARY OF THE INVENTION

The chain according to the invention comprises links interconnected by connecting pins. In the case of a silent chain, the plates are link plates arranged in interleaved rows. The base material of each of the connecting pins is steel, and an outer portion of each pin, extending from the base material to an outer surface thereof, contains vanadium carbide formed by diffusion penetration. The outer portion is composed of an inner layer containing V₈C₇, and an outermost layer containing V₂C . Preferably, the inner layer, which contains V₈C₇, is thicker than outermost layer, which containing V₂C.

The V₂C-containing outermost layer of each of the pins, can be subj ected to treatment, preferably barrel polishing, to reduce the surface roughness of the pin, that is, by reducing the ten point mean surface roughness (R2) as measured using the Japanese Industrial Standard JIS 0601-1976.

The V₂C layer and the V₈C₇ layer exhibit different characteristics. The inner layer, which consists primarily of V₈C₇ on the base material of the pin, has a high hardness, i.e., a Vickers hardness (HV) of 2500 to 3000 or more. The outermost layer, which consists primarily of V₂C is porous, and exhibits superior wear resistance, heat resistance and lubricity. Thus, even if the chain is used in an extremely deteriorated lubricating oil having a high degree of oxidation, a synergistic effect is achieved by the two layers. The second layer suppresses the attack on the first layer by deteriorated oil. Thus, abnormal wear elongation is suppressed, and a chain having excellent wear resistance, heat resistance and lubricity can be obtained for use in an automobile engine.

When the pin is subjected to treatment to reduce its surface roughness, the affinity of the pin for the inner surfaces of the pin holes in the inner link plates of a silent chain, or in the bushings of a roller chain or a rollerless bushing chain, is reduced. Furthermore, wear occurring during initial conformation of the pins and the pin holes is reduced. Thus, both initial wear and steady-state wear are reduced.

Various finishing processes are available for reducing the surface roughness of the pin. Among the options is "superfinishing," which is a process used to finish inner and outer surfaces of a workpiece. The superfinishing process comprising using a spring to press a grindstone into contact with a wide surface area of a rolling workpiece, and imparting a minute, low-frequency, vibration in the direction of the axis of rotation of the rolling workpiece. Another option is chemical polishing, in which a workpiece is immersed in a processing solution to make the surface of the work smooth by a chemical reaction, thereby imparting brilliance to the work. Another option is electrolytic polishing, in which the workpiece is immersed in an electrolytic solution and passing an electric current between the workpiece, which is connected to the positive side of the electric current supply and becomes an anode, and another electrode which is immersed in the electrolytic solution and connected to the negative side of the electric current supply so that it becomes a cathode. The surface of the workpiece is eluted into the electrolytic solution. The best option, however, is barrel polishing. When barrel polishing is used as the treatment to reduce the surface roughness of the pin, greater friction is generated between the pin being worked and the abrasive material used in the finishing process. Barrel polishing produces results superior to those produced by superfinishing, chemical polishing, and electrolytic polishing, and makes it possible to carry out finishing of a small part such as a pin efficiently.

When the inner vanadium carbide layer on the pin, i.e., the layer containing V₈C₇, is thicker than an outer vanadium carbide layer, containing V₂C, good wear resistance can be achieved while the affinity of the pin for wall of the pin hole is reduced. Thus, the shock resistance of the chain is improved, and abrasion loss of the inner surface of the pin hole can be suppressed.

The invention provide, for use in an automobile engine, a silent chain which exhibits excellent endurance, wear resistance and shock resistance. In addition, wear due to adhesion is suppressed, and therefore, the chain flexes and slides smoothly over a long period of time. Because the endurance of the chain is improved, the invention is also environmentally beneficial in that it can effectively extend the lifetime of the lubricating oil used with the chain.

### BRIEF DESCRIPTION OF THE DRAWINGS

FIG. 1 is a partially broken-away perspective view of a part of a silent chain according to the invention;

FIG. 2 is a graph depicting the results of chain elongation tests, of a conventional silent chain and chains in accordance with the invention, carried out in deteriorated lubricating oil; and

FIG. 3 is a microphotograph showing the cross-sectional structure of a pin in a silent chain according to the invention.

### DETAILED DESCRIPTION OF THE PREFERRED EMBODIMENT

Although the invention will be described with reference to a silent chain, it should be understood that similar effects can be achieved in a roller chain and also in a rollerless bushing chain. In the case of a silent chain, the connecting pins are in sliding contact with the inner walls of the pin holes in the link plates of the chain. In the case of a roller chain or a rollerless bushing chain, the connecting pins are in sliding contact with the inner walls of the bushings. In all of these kinds of transmission chains, the invention can prevent deterioration due to sliding contact between the connecting pins and their opposed surfaces, especially in a deteriorated lubricating oil environment.

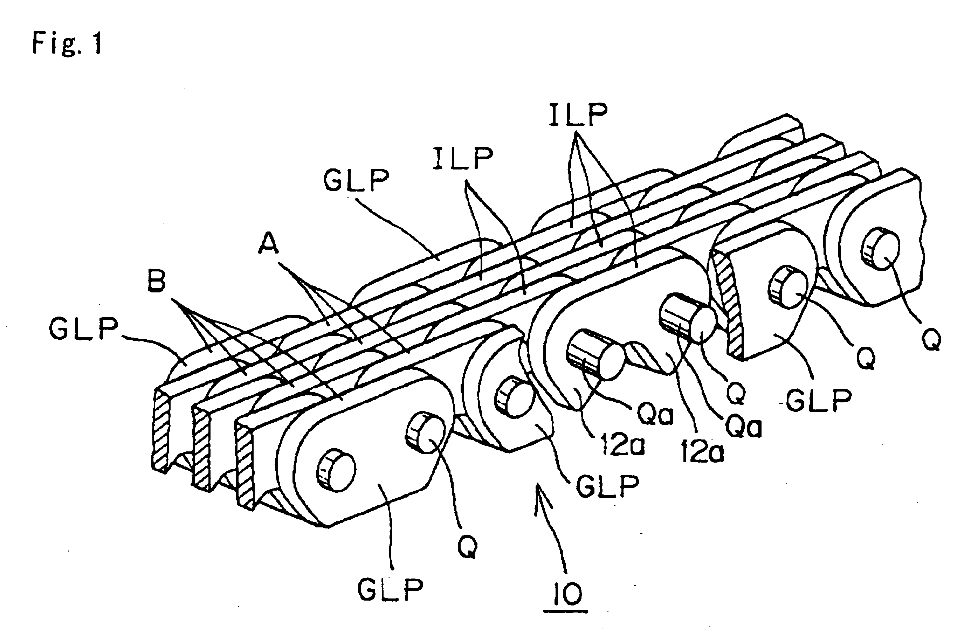

In FIG. 1, two guide link plates GLP are partly cut away to show a link plate having a pair of teeth 12a. The silent chain 10 is an endless chain formed by interleaved rows of link plates interconnected by pins Q. Each row comprises a plurality of inner link plates ILP, and every second row also comprises a pair of guide link plates GLP. The silent chain 10 shown in FIG. 1 comprises guide rows B, each consisting of two inner links ILP and two guide link plates GLP, and joint rows A, each consisting of three inner link plates ILP. The connecting pins Q are press fit into holes in the guide link plates GLP, which having no teeth. The inner link plates ILP, are rotatable on the pins.

The link plates are composed of carbon steel. The base material of the pins can be steel or a low carbon steel. A high carbon surface layer is formed on a surfaces Qa of the pins. The method of forming the high carbon surface layer is not particularly limited, but the formation of the high carbon surface layer is preferably carried out by a carburizing treatment. In the carburizing treatment, the pin 12 is heated to approximately 900EC to 950EC in a carburizing agent in order to diffuse carbon into the surface of the pin and thereby increase the carbon content in the surface. If high carbon steel is used as the base material of the pin Q, carburizing treatment is not needed.

A vanadium carbide layer is formed on a surface of the pin Q by a diffusion penetration treatment, preferably carried out by the "powder pack" method, in which pins are placed in vanadium powder or a vanadium alloy powder. Preferably, an anti-sintering agent such as alumina or the like, and a reaction promoting agent such as ammonium chloride or the like, are added to the vanadium or vanadium alloy powder. The pins are then heat-treated at a high temperature in the range from about 900EC to 1200EC, for about 5 to 25 hours, to form a vanadium carbide layer on the surface of each of the pins.

Another known option for forming the vanadium carbide layer is to utilize a molten salt method, also known as the "Toyota Diffusion" method, in which the pin is treated in molten salt. Still another known option for forming the chromizing letter is to utilize the so-called "A application" method, in which a vanadium powder and a suspending agent are applied as a coating material to the pin, and the coated pin is then dried and heated in an inert gas atmosphere or in a vacuum. The "powder pack" method, however, is preferred because it is inexpensive and especially suitable for treatment of small articles such as connecting pins for timing chains.

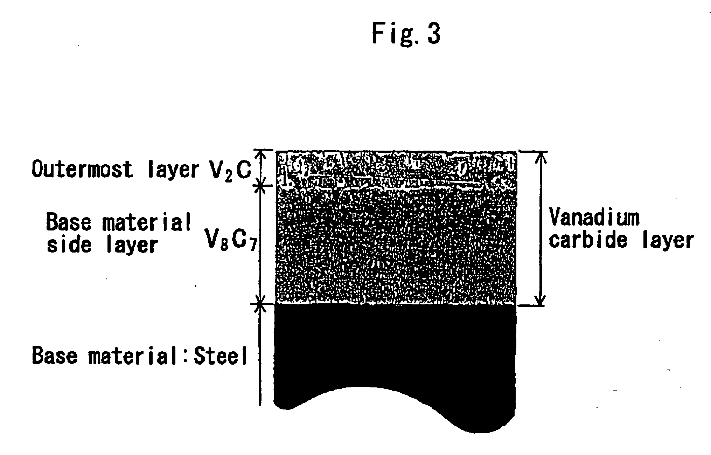

As the vanadium carbide layer is formed on the high carbon surface layer of the pin by the diffusion penetration treatment, the treatment temperature is preferably set to about 1000EC. Since vanadium is a strong carbide-forming element, carbon contained in the high carbon surface layer formed of the pin, or from the pin base material itself in the case of a pin formed of high carbon steel, penetrates by diffusion into the vanadium layer formed on the surface of the pin to combine with the vanadium. As can be seen from a cross-sectional photograph of FIG. 3, which was taken by an electron microscope, the vanadium carbide layer is composed of two parts: an inner layer, formed on the steel base material, which becomes a V₈C₇ containing layer, and an outermost layer, which becomes a V₂C containing layer. V₈C₇ is the main component of the inner layer, and V₂C is the main component of the outer layer.

In the preferred embodiment, the thickness of the inner layer, i.e., the V₈C₇-containing layer, is in the range from 8 to 12 µm, and the thickness of the V₂C-containing outermost layer is in the range from about 1 to 4 µm.

The mechanism by which the vanadium carbide layer on the surface of the pin becomes divided into two different sublayers is not fully understood at the present time. However, it appears that the vanadium, supplied as a powder, combines with carbon supplied from the high carbon pin, or from the high carbon surface layer of the pin, to form a V₈C₇ layer, i.e. a layer having a high carbon to vanadium ratio in the vicinity of the base material, and a V₂C layer, i.e., a layer having a lower carbon to vanadium ratio, farther from the base material. It is believed that, in the process of formation of the solid phase vanadium carbide, a balancing takes in which the vanadium carbide becomes divided into the two different layers.

Wear elongation tests were carried out to determine the properties of the pin according to the invention under the following test conditions:
Chain: Silent chain having a pitch of 6.35 mm
Number of teeth on the sprockets: 18 and 36
Rotation speed: 6500 r/min
Lubricating oil: Deteriorated engine oil
Amount of oil: 1L/min
The tests were carried out using a testing apparatus and method generally used by the art. However, the same general results can be expected even if a different test method is used.

Three examples were compared, a conventional chain and two chains according to the invention.

The chain of Example 1 is a chain according to the invention in which no treatment was applied to reduce the surface roughness of the pins. The surface roughness of the chain of Example 1 had a ten point mean roughness (Rz) value in the range of 0.4 to 0.8µm.

The chain of Example 2 is a chain which is the same as the chain of Example 1, except that a treatment was applied to reduce the surface roughness of the pins, while still leaving an outermost layer containing V₂C. In this case, the surface roughness of the outermost layer of the pin, i.e., the layer containing V₂C, was decreased by barrel polishing. In barrel polishing, friction between a pin and an abrasive material is generated, and polishing of small articles such as pins can be carried out efficiently. The ten point mean surface roughness (Rz) of the pin of Example 2 had a value in the range from 0.2 to 0.3µm. The V₈C₇-containing outermost layer in Example 2 was porous, so that recesses were formed in the exposed surface of the layer. The recesses function as basins that maintain improved lubricity over a long period of time, so that the endurance of the roller chain is improved.

In the conventional case, used for comparison, the pins were subjected to a full barrel polishing treatment, so that the outermost V₂C layer was completely removed. Thus, the surface roughness of the pin of the conventional case was improved and was substantially the same as the surface roughness of the pin Example 2.

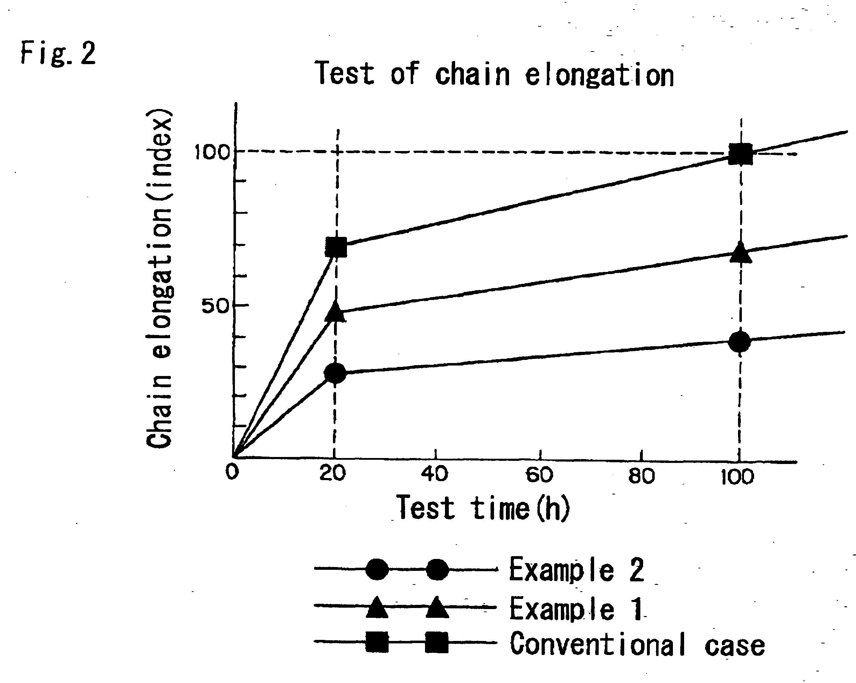

From the results of the chain elongation tests shown in FIG. 2, it can be seen that, after 100 hours of operation, the elongation of the chain of Example 1 was only about 70% of the elongation of the conventional chain. The curves in FIG. 2, are relatively steep until about twenty hours of testing, at which time, the slope of the curves becomes more gradual. The steeper slopes at times up to twenty hours are due to initial wear. It can be seen, however, that the initial wear is smaller in Examples 1 and 2 than in the case of a conventional silent chain. The initial wear in Example 1, which had two vanadium carbide layers on the surface of the pin, was less than in the conventional case where the connecting pins had only one vanadium carbide layer. Furthermore, in Example 2, wear due to the attack by the pin on a surface of the pin hole through which it extends was reduced as a result of the reduced surface roughness of the pin.

In the roller chain of Example 2, the surface roughness of the outermost layer of the pin Q, containing V₂C, was decreased by barrel polishing treatment. The barrel polishing treatment resulted in superior lubricity that could be maintained over a long period of time. Thus, the endurance of the silent chain was improved. Barrel polishing generates relative friction between a pin to be worked and an abrasive material. Thus, polishing of a small article such as a connecting pin can be carried out efficiently by barrel polishing.

From the results of the chain elongation tests shown in FIG. 2, it can be seen that, at 100 hours, the elongation of the silent chain of Example 2, in which the surface roughness was reduced, was only about 40% of the elongation of the conventional silent chain. Thus, when the thickness of the outermost layer of the pin is within the range of about 1 to 4 µm, so that the outermost layer is not completely removed, a much lower wear elongation of the chain is achieved compared to that of the conventional chain.

In the silent chain of Example 2, in which the surface roughness of the pins is reduced while the presence of an outermost V₂C layer is maintained, attack by the connecting pins on the inner walls of the pin holes in the inner link plates is reduced, and abrasive loss of the inner circumferential surfaces of the pin holes is suppressed.

### INDUSTRIAL APPLICABILITY

The invention has significant industrial applicability in that the V₂C layer, which was previously considered a useless impurity, reduces abnormal wear elongation of the chain due to operation in deteriorated lubricating oil, and improves shock resistance, heat resistance, and lubricity. Moreover, when the surface roughness of the V₂C layer is reduced, the affinity of the outer surfaces of the pins for the walls of the pin holes in the inner link plates is reduced by reducing the surface roughness of the outermost layers of the pins. These effects can be achieved reproducibly and without the need for special production facilities or expensive materials.

## Claims

1. A chain (10) for use in an automobile engine comprising links interconnected by connecting pins (Q), wherein the base material of each of the connecting pins (Q) is steel, and an outer portion of each pin (Q), extending from the base material to an outer surface (Qa) thereof, contains vanadium carbide formed by diffusion penetration **characterised in that** said outer portion is composed of
an inner layer containing V₈C₇, and an outermost layer containing V₂C,
in which the outermost layer of each of said pins (Q), containing V₂C, is subjected to treatment to reduce the surface roughness of the pin (Q).

2. A chain (10) according to claim 1, in which said inner layer, containing V₈C₇, is thicker than said outermost layer containing V₂C.

3. A chain (10) according to claim 1 or 2, in which said treatment to reduce surface roughness is a barrel polishing treatment.

4. A chain (10) according to one of claims 1 to 3, in which the links are composed of link plates arranged in interleaved rows (A, B), and in which the interleaved rows (A, B) are interconnected by said connecting pins (Q).

## Patentansprüche

1. Eine Kette (10) zur Verwendung in einem Kraftfahrzeugmotor mit Gliedern, die mittels Verbindungsstiften (Q) miteinander verbunden sind, wobei das Basismaterial eines jeden Verbindungsstifts (Q) Stahl ist und ein äußerer Abschnitt eines jeden Stifts (Q), der sich von dem Basismaterial zu einer äußeren Oberfläche (Qa) davon erstreckt, Vanadiumcarbid enthält, das durch Diffusionseindringung gebildet ist, **dadurch gekennzeichnet, dass** der äußere Abschnitt aus einer inneren Schicht, die V₈C₇ enthält, und einer äußersten Schicht zusammengesetzt ist, die V₂C enthält,
wobei die äußerste Schicht eines jeden der Stifte (Q), die V₂C enthält, einer Behandlung unterworfen ist, um die Oberflächenrauigkeit des Stifts (Q) zu reduzieren.

2. Eine Kette (10) nach Anspruch 1, bei der die innere Schicht, die V₈C₇ enthält, dicker ist als die äußerste Schicht, die V₂C enthält.

3. Eine Kette (10) nach Anspruch 1 oder 2, bei der die Behandlung, um die Oberflächenrauigkeit zu reduzieren, eine Trommelpolier-Behandlung ist.

4. Eine Kette (10) nach einem der Ansprüche 1 bis 3, bei der die Glieder aus Kettenlaschen zusammengesetzt sind, die in überlappenden Reihen (A, B) angeordnet sind, und bei der die überlappenden Reihen (A, B) mittels der Verbindungsstifte (Q) miteinander verbunden sind.

## Revendications

1. Chaîne (10) destinée à être utilisée dans un moteur de véhicule automobile comprenant des maillons interconnectés par des goupilles de raccordement (Q), dans laquelle le matériau de base de chacune des goupilles de raccordement (Q) est l'acier, et une partie externe de chaque goupille (Q), s'étendant à partir du matériau de base jusqu'à sa surface externe (Qa), contient du carbure de vanadium formé par pénétration diffusion, **caractérisée en ce que** ladite partie externe est composée d'une couche interne contenant V₈C₇, et d'une couche située le plus à l'extérieur contenant V₂C,
dans laquelle la couche située le plus à l'extérieur de chacune desdites goupilles (Q), contenant V₂C, est soumise à un traitement pour réduire la rugosité de surface de la goupille (Q).

2. Chaîne (10) selon la revendication 1, dans laquelle ladite couche interne, contenant V₈C₇, est plus épaisse que ladite couche située le plus à l'extérieur contenant V₂C.

3. Chaîne (10) selon la revendication 1 ou 2, dans laquelle ledit traitement pour réduire la rugosité de surface est un traitement de polissage au tonneau.

4. Chaîne (10) selon l'une quelconque des revendications 1 à 3, dans laquelle les maillons sont composés de plaques de maillon agencées dans des rangées intercalées (A, B), et dans laquelle les rangées intercalées (A, B) sont interconnectées par lesdites goupilles de raccordement (Q).
